# EUROPÄISCHE PATENTSCHRIFT

(11) **EP 0 719 483 B1**
(45) Veröffentlichungstag und Bekanntmachung des Hinweises auf die Patenterteilung: **07.05.1997**
(21) Anmeldenummer: 94920980.3
(22) Anmeldetag: 08.07.1994
(51) Int. Cl.: H04H 5/00

(54) **VERFAHREN ZUM BESTIMMEN DER ZU WÄHLENDEN CODIERUNGSART FÜR DIE CODIERUNG VON WENIGSTENS ZWEI SIGNALEN**
PROCESS FOR DETERMINING THE TYPE OF CODING TO BE SELECTED FOR CODING AT LEAST TWO SIGNALS
PROCEDE DE DETERMINATION DU MODE DE CODAGE A SELECTIONNER POUR CODER AU MOINS DEUX SIGNAUX

(30) Priorität: 15.09.1993 DE 4331376; 15.09.1993 DE 4345171
(43) Veröffentlichungstag der Anmeldung: 03.07.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: HERRE, Jürgen, D-91054 Buckenhof (DE); GRILL, Bernhard, D-91207 Lauf (DE); EBERLEIN, Ernst, D-91091 Grossenseebach (DE); BRANDENBURG, Karlheinz, D-91054 Erlangen (DE); SEITZER, Dieter, D-91054 Erlangen (DE)
(74) Vertreter: Schoppe, Fritz, Dipl.-Ing.
(86) Internationale Anmeldenummer: EP9402250
(87) Internationale Veröffentlichungsnummer: WO9508227

(56) Entgegenhaltungen:
- EP-A- 0 559 383
- DE-A- 4 217 276
- IEEE INTERNATIONAL CONFERENCE ON ACOUSTICS, SPEECH AND SIGNAL PROCESSING, Bd.2, 23. März 1992, SAN FRANCISCO, CA, USA Seiten 569 - 572 J.D. JOHNSTON, A.J. FERREIRA 'SUM-DIFFERENCE STEREO TRANSFORM CODING'

## Beschreibung

Die Erfindung bezieht sich auf ein Verfahren zum Bestimmen der zu wählenden Codierungsart für die Codierung von wenigstens zwei Signalen, bei dem jedes Signal in den Frequenzbereich transformiert wird und ausgehend von den Spektralwerten ein Ähnlichkeitsmaß für die Ähnlichkeit von jeweils wenigstens zwei Signalen zueinander ermittelt wird, gemäß dem Oberbegriff der Patentansprüche 1 und 2.

Insbesondere befaßt sich die Erfindung mit einer optimierten Codierungswahl für die Codierung von zwei oder mehr Signalen, von denen wenigstens zwei voneinander nicht unabhängig sind, sondern zumindest teilweise redundante bzw. irrelevante Informationen enthalten.

Allgemein werden bei Verfahren zur datenreduzierten Codierung digitaler Audiosignale die Signale aus dem Zeitbereich zunächst in den Frequenzbereich transformiert. Handelt es sich um Signale, die nicht unabhängig voneinander sind, so ist es üblich, sich einer datenreduzierenden Codierung zu bedienen, welche die Redundanz zwischen den beiden oder den mehreren Kanälen berücksichtigt.

Eine derartige Codierung ist als sogenannte Mitte/Seite-Codierung bekannt geworden (J. D. Johnston, "Perceptual Transform Coding of Wideband Stereo Signal", IC ASSP, IEEE, 1989, S. 1993 bis 1996). Bei dieser Mitte/Seite-Codierung wird aufgrund des linken und rechten Kanales einerseits die Summe bzw. Mitte und anderseits die Differenz bzw. Seite der Stereosignale codiert.

Eine weitere, mittlerweile übliche Codierungsart ist das Intensity-Stereo-Verfahren, das in der Veröffentlichung "Subband Coding of Stereophonie Digital Audio Signals", Proc. of the IC ASSP, 1991, IEEE, Toronto, S. 3601 bis 3604, beschrieben ist. Bei dem Intensity-Stereo-Verfahren wird aufgrund der beiden Kanäle ein Monosignal gebildet und mit einer zusätzlichen Information über die Links/Rechts-Verteilung des Signales übertragen.

Bereits in dem Deutschen Patent DE 41 36 825 C1 der Anmelderin ist es beschrieben, daß bei derartigen Verfahren starke Störungen auftreten können, wenn die Signale nur eine relativ geringe Ähnlichkeit aufweisen oder gar vollständig unabhängig voneinander sind. So ist es bekannt, daß eine stark unterschiedliche Zusammensetzung der Signale im linken und rechten Kanal bei der Mitte/Seite-Codierung zu Artefakten führt, die durch das tatsächlich im Kanal vorhandene Signal nicht verdeckt werden können. Bei der Verwendung des Intensity-Stereo-Verfahrens kann es zur Zerstörung des räumlichen Klangbildes kommen, wenn der linke und rechte Kanal erheblich voneinander abweichende Spektralwerte haben.

Um diesem Problem zu begegnen, wird in dieser Schriftvorgeschlagen, aufgrund der Spektralwerte der in den Frequenzbereich transformierten Signale ein Ähnlichkeitsmaß zu ermitteln, aufgrund dessen eine Umschaltung zwischen unterschiedlichen Codierungsarten vorgenommen wird. Ergeben die Spektralwerte ein hohes Ähnlichkeitsmaß, so wird bei dem dort beschriebenen Verfahren eine Mitte/Seite-Codierung eingesetzt, während im Falle eines niedrigen Ähnlichkeitsmaßes und somit im Falle einer geringen spektralen Ähnlichkeit der betrachteten Kanäle eine getrennte Codierung der Kanäle vorgenommen wird. Gleichfalls ist es aus diesem Patent bekannt, aufgrund der zu codierenden Signale mittels eines psychoakustischen Modelles die Maskierungsschwelle zu berechnen, mit der eine der Mitte/Seite-Codierungstufe nachgeschaltete Datenverminderungsstufe angesteuert wird, die unter Berücksichtigung der Verdeckung eine Datenreduktion erreicht.

Die DE 41 36 825 C1 beschreibt in ihrem indirekt auf Anspruch 8 rückbezogenen Anspruch 15 lediglich, bei der Bestimmung der auf Null setzbaren Spektralwerte eine Maskierungsschwelle zu verwenden.

Obgleich mit dem aus dem Deutschen Patent 41 36 825 bekannten Verfahren bereits eine erhebliche Qualitätssteigerung gegenüber unveränderten Mitte/Seite-Codierungs-Verfahren sowie gegenüber unveränderten Intensity-Stereo-Verfahren erreicht wird, ist eine weitere Steigerung der Qualität der zu übertragenden Daten bei weiterer Reduktion der Datenrate wünschenswert.

Ausgehend von diesem Stand der Technik liegt der Erfindung daher die Aufgabe zugrunde, ein Verfahren zum Bestimmen der zu wählenden Codierungart für die Codierung von wenigstens zwei Signalen so weiterzubilden, daß bei Erhöhung der Qualität der codierten Daten bzw. Erhöhung der Qualität der aufgrund dieser Daten decodierten Signale eine weitere Datenreduktion erreicht wird.

Diese Aufgabe wird durch Verfahren gemäß den Patentansprüchen 1, 2 und 3 gelöst.

Gemäß einem ersten Aspekt der Erfindung wird nicht nur eine Frequenztransformation der beiden nach einer von zwei Codierungsarten zu codierenden Signale zur Erzeugung entsprechender Spektralwerte vorgenommen, sondern gleichfalls wenigstens eines der Signale derjenigen Codierungsart unterworfen, welche im Falle der Feststellung eines hohen Ähnlichkeitsmaßes verwendet wird, und sodann wieder decodiert, um wenigstens ein Codierungsfehler-behaftetes Signal zu erzeugen, welches sodann gleichfalls in den Frequenzbereich transformiert wird. Sodann werden mittels einer durch eine psychoakustische Berechnung ermittelten Mithörschwelle die jeweiligen, tatsächlich hörbaren Spektralanteile ausgehend sowohl von den Spektralwerten des Codierungsfehler-behafteten Signales wie auch von den Spektralwerten des zu diesem Codierungsfehler-behafteten Signal zugehörigen Signales selektiert oder bewertet. Anschließend wird das Ähnlichkeitsmaß, aufgrund dessen eine der wenigstens zwei Codierungsarten ausgewählt wird, aufgrund der so selektierten hörbaren Spektralanteile wenigstens des Codierungsfehler-behafteten Signales und des zugehörigen Signales berechnet.

Gemäß einem zweiten Aspekt der Erfindung wird nicht nur eine Frequenztransformation der beiden nach einer von zwei Codierungsarten zu codierenden Signale zur Erzeugung entsprechender Spektralwerte vorgenommen, sondern gleichfalls wenigstens eines der Signale nach seiner Transformation in den Frequenzbereich derjenigen Codierungsart unterworfen, welche im Falle der Feststellung eines hohen Ähnlichkeitsmaßes verwendet wird, und sodann wieder decodiert, um wenigstens ein Codierungsfehler-behaftetes Signal zu erzeugen. Sodann werden mittels einer durch eine psychoakustische Berechnung ermittelten Mithörschwelle die jeweiligen, tatsächlich hörbaren Spektralanteile ausgehend sowohl von den Spektralwerten des Codierungsfehler-behafteten Signales wie auch von den Spektralwerten des zu diesem Codierungsfehler-behafteten Signal zugehörigen Signales selektiert oder bewertet. Anschließend wird das Ähnlichkeitsmaß, aufgrund dessen eine der wenigstens zwei Codierungsarten ausgewählt wird, aufgrund der so selektierten oder bewerteten hörbaren Spektralanteile wenigstens des Codierungsfehler-behafteten Signales und des zugehörigen Signales berechnet.

Damit bedient sich die Erfindung im Gegensatz zum Stand der Technik einer psychoakustischen Bewertung der Spektralanteile sowohl eines Signales wie auch der Spektralanteile eines entsprechenden Signales, das mit einem Codierungsfehler behaftet ist, wie er bei der datenreduzierenden Codierungsart auftritt, um die Auswahl von einer von wenigstens zwei Codierungsarten vorzunehmen.

Gemäß einem dritten Aspekt der Erfindung wird ausgehend von den Spektralwerten zweier Signale, die beispielsweise zwei unterschiedlichen Kanälen entsprechen, eine Selektion oder Bewertung der tatsächlich hörbaren Spektralanteile unter Verwendung einer durch eine psychoakustische Berechnung ermittelten Mithörschwelle vorgenommen, woraufhin das Ähnlichkeitsmaß, mit dem eine von wenigstens zwei Codierungsarten ausgewählt wird, aufgrund der so selektierten oder bewerteten hörbaren Spektralanteile der wenigstens zwei Signale ermittelt wird. Auch dieser Ansatz der Erfindung nutzt im Gegensatz zum Stand der Technik die durch eine psychoakustische Berechnung ermittelte Mithörschwelle nicht oder zumindest nicht nur zum Zwecke der Datenreduktion des codierten Signales, sondern für die Bestimmung des Ähnlichkeitsmaßes, mit dem die Auswahl der Codierungsart vorgenommen wird. Dieses Konzept, das den drei Aspekten der Erfindung gemeinsam ist, steht im klaren Gegensatz zum bisherigen Stand der Technik und erlaubt eine Auswahl der Codierungsart unter psychoakustischen Gesichtspunkten.

Bevorzugte Weiterbildungen der erfindungsgemäßen Verfahren sind in den Unteransprüchen festgelegt.

Nachfolgend werden unter Bezugnahme auf die beiliegenden Zeichnungen bevorzugte Ausführungsbeispiele von Vorrichtungen zur Durchführung der erfindungsgemäßen Verfahren näher erläutert. Es zeigt:
- Fig. 1a: ein erstes Ausführungsbeispiel einer Vorrichtung zur Durchführung wesentlicher Teile des Verfahrens zur Bestimmung der zu wählenden Codierungsart;
- Fig. 1b: ein zweites, gegenüber dem ersten Ausführungsbeispiel nur geringfügig abgewandeltes Ausführungsbeispiel einer Vorrichtung zur Durchführung wesentlicher Teile des Verfahrens zur Bestimmung der zu wählenden Codierungsart;
- Fig. 2: ein drittes Ausführungsbeispiel einer Vorrichtung zur Durchführung wesentlicher Teile des erfindungsgemäßen Verfahrens zur Bestimmung der zu wählenden Codierungsart;
- Fig. 3: ein Blockdiagramm einer Vorrichtung zum Bestimmen des Ähnlichkeitsmaßes aufgrund der Ausgangssignale der Vorrichtung gemäß Fig. 1;
- Fig. 4: ein Blockdiagramm einer Vorrichtung zum Bestimmen des Ähnlichkeitsmaßes aufgrund der Ausgangssignale einer Vorrichtung gemäß Fig. 2;
- Fig. 5: ein gegenüber der Fig. 3 abgewandeltes Blockdiagramm der Vorrichtung zum Bestimmen des Ähnlichkeitsmaßes aufgrund der Ausgangssignale der Vorrichtung gemäß Fig. 1;
- Fig. 6: ein Blockdiagramm zur Verdeutlichung der Struktur der jeweiligen ersten beiden Blöcke für jedes Signal bei den Vorrichtungen gemäß den Fig. 1 und 2 zur Durchführung der Zeit/Frequenz-Transformation und der Bestimmung der Kurzzeitenergien; und
- Fig. 7: eine Tabelle zur Verdeutlichung der Funktionsweise und Struktur einer Hybrid- bzw. Polyphasen-Filterbank zur Durchführung einer an die Charakteristik des menschlichen Hörsinnes angepaßten Transformation mit ungleicher Zeit/Frequenz-Auflösung.

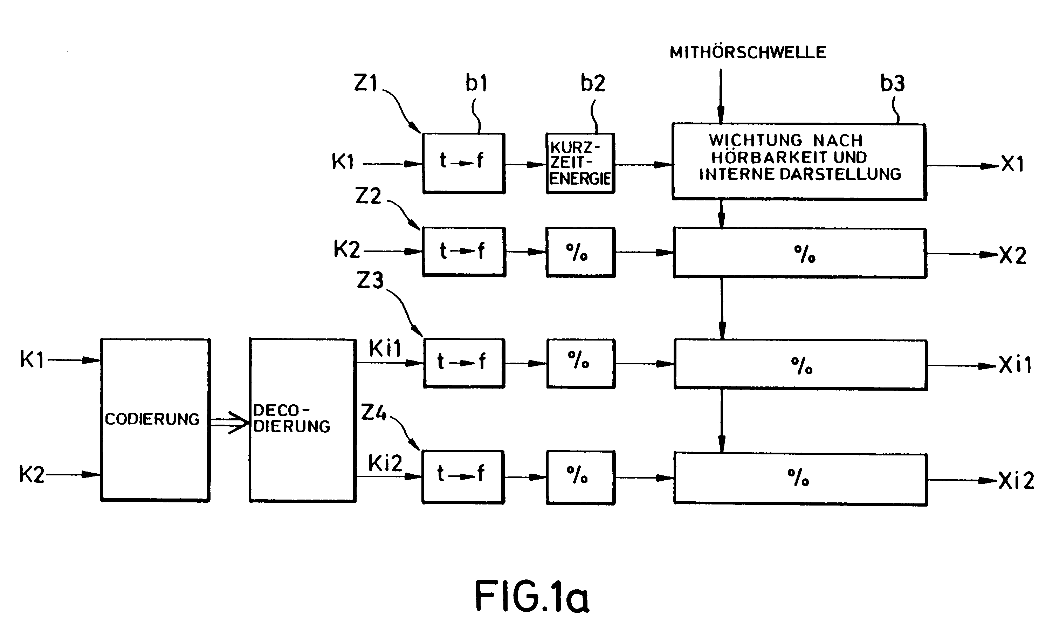

Fig. 1a zeigt das Blockdiagramm einer Vorrichtung zur Durchführung wesentlicher Teile des Verfahrens nach dem ersten Erfindungsaspekt zum Bestimmen der zu wählenden Codierungsart. Das hier gezeigte Ausführungsbeispiel ist einsetzbar zur Steuerung der Umschaltung zwischen einer getrennten Codierung von zwei Stereokanälen k1, k2 und einer Codierung nach dem "Intensity-Stereo-Codierungsverfahren", welches an sich aus der eingangs gewürdigten Schrift zu entnehmen ist.

Es sei jedoch bereits an dieser Stelle hervorgehoben, daß die erfindungsgemäßen Verfahren sich nicht nur zur Auswahl entweder einer getrennten Codierung zweier Stereokanäle k1, k2 oder einer Codierung der Kanäle nach dem Intensity-Stereo-Verfahren eignen, sondern auch zur Auswahl einer Codierungsart von wenigstens zwei beliebigen Codierungsarten dient, von denen sich eine besser als die nicht-ausgewählte andere zur Codierung von Signalen eignet, die eine gewisse Ähnlichkeit untereinander haben, wodurch eine höhere Bitreduktion erreicht wird. Die Anwendung der erfindungsgemäßen Verfahren, wie sie nachfolgend im einzelnen erläutert werden, beschränkt sich nicht auf die Codierung von Stereosignalen beispielsweise gemäß ISO/MPEG Layer 1 bis 3, sondern beispielsweise auch für die Multikanalcodierung, wie sie beispielsweise gemäß MPEG 2 vorgenommen werden kann.

Wie in Fig. 1a verdeutlicht wird, enthält die dort gezeigte Vorrichtung vier Signalverarbeitungszweige z1, z2, z3, z4, von denen ein jeder drei übereinstimmende Blöcke b1, b2, b3 aufweist.

Der Block b1 dient zur Zeit/Frequenz-Transformation des eingangsseitigen diskreten Zeitsignales k1, k2, ki1, ki2. In Betracht kommen hier beliebige, an sich bekannte Frequenztransformationsverfahren für die Transformation der Eingangsseitigen Audiodaten von dem Zeitbereich in dem Frequenz- bzw. Spektralbereich. In Betracht kommen Verfahren, wie beispielsweise FFT, DCT, MDCT, die Verwendung einer Polyphasenfilterbank oder einer Hybridfilterbank.

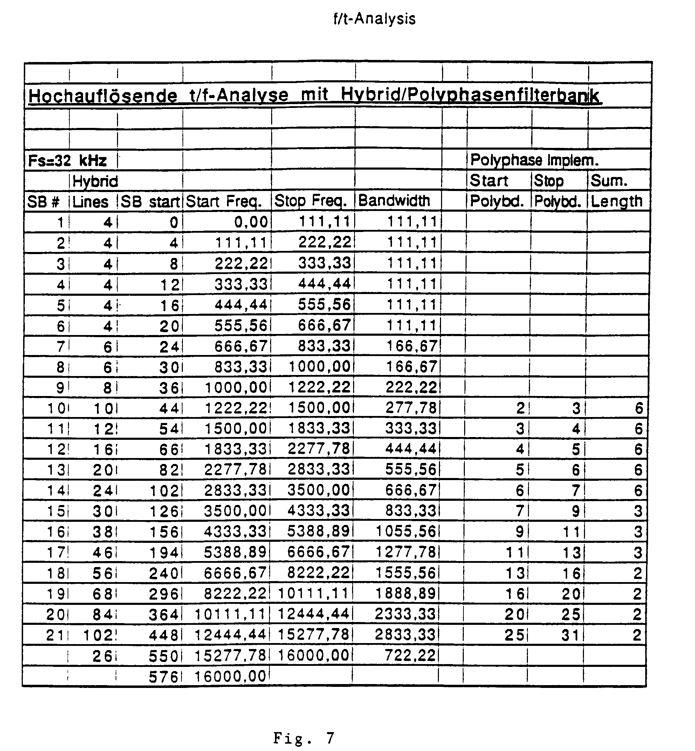

Vorzugsweise bedient sich jedoch, wie nachfolgend im einzelnen näher erläutert werden wird, die Erfindung eines Transformationsverfahrens mit ungleicher Zeit- und Frequenzauflösung, die der Charakteristik des menschlichen Hörsinnes angepaßt ist. Bei einem derartigen Verfahren, wie es an sich im Bereich der Psychoakustik bekannt ist, haben lediglich die unteren Frequenzgruppen eine übereinstimmende Breite, während die Breite von Frequenz gruppen ab einer bestimmten Frequenz zunimmt, wie dies im einzelnen unter Bezugnahme auf die Tabelle der Fig. 7 weiter verdeutlicht werden wird. Entsprechend der Heisenberg-Grenze von 0,5 für das Produkt aus Frequenzgruppenbreite und Zeitauflösung nimmt die Zeitauflösung mit zunehmender Frequenzgruppenbreite ab.

Im zweiten Block b2 werden die durch Transformation gewonnenen Spektralwerte beispielsweise durch Quadrierung und Summation über die entsprechenden Zeiten in Kurzzeitenergiewerte für die einzelnen Frequenzgruppenbänder umgewandelt. Die so gewonnen Kurzzeitenergiewerte für die einzelnen Frequenzgruppenbreiten werden im dritten Block b3 unter Verwendung einer Mithörschwelle, die aus einer psychoakustischen Berechnung für das betreffende Signal hergeleitet ist, selektiert oder bewertet, um aus den realen Energien nur die tatsächlich hörbaren Anteile zur Berücksichtigung psychoakustischer Verdeckungseffekte herauszunehmen. Im Block b3 kann, auch wenn dies für die Zwecke der Erfindung nicht zwingend ist, ferner eine interne Darstellung bzw. weitere Abbildung zur Modellierung des menschlichen Innenohres durchgeführt werden, die die Nicht-Linearitäten des menschlichen Innenohres beschreibt. Hierzu können beispielsweise Funktionen der Form x^{α} verwendet werden, wobei für den Exponenten α gilt: 0,1 < α < 10.

Die beschriebene Berechnung wird nicht nur für die beiden Originalkanäle k1, k2 des Stereosignales in den ersten beiden Zweigen z1, z2 vorgenommen, um die Werte x1, x2 zu erhalten. Gleichfalls werden diese Berechnungen für zwei Codierungsfehler-behaftete Signale ki1, ki2 zur Bildung der Ausgangswerte xi1, xi2 durchgeführt, wobei die Codierungsfehler-behafteten Werte aus den beiden Originalkanälen k1, k2 dadurch gewonnen werden, daß diese zunächst mit der Codierungsart codiert werden, welche im Fall der größeren Ähnlichkeit angewendet wird, wobei diese Codierungsart in dem bevorzugten Ausführungsbeispiel die Intensity-Stereo-Codierungsart ist. Die so durch gemeinsame Codierung gewonnenen codierten Signale werden nach dem Intensity-Stereo-Verfahren in an sich bekannter Art decodiert, um die Codierungsfehler-behafteten Signale ki1, ki2 zu gewinnen.

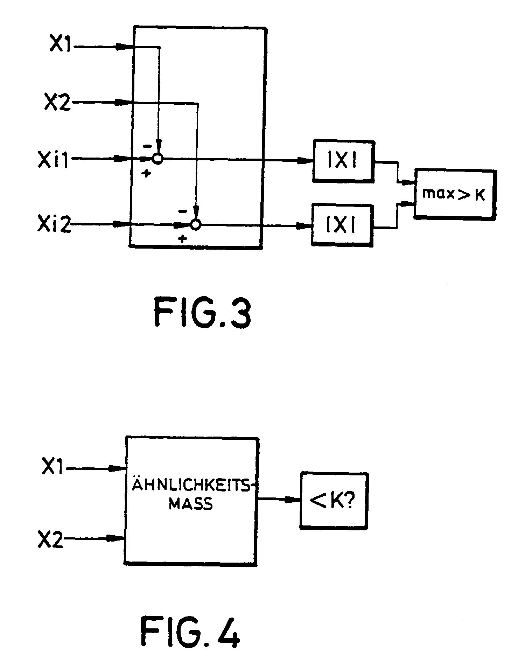

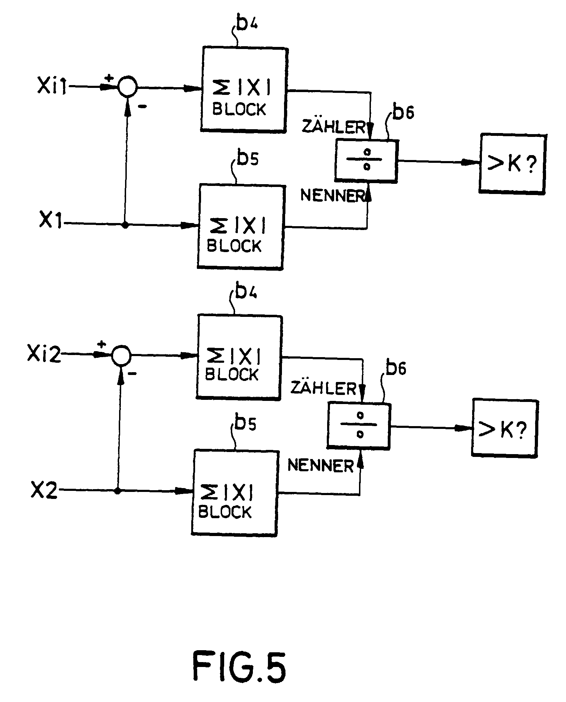

Die Bestimmung des Ähnlichkeitsmaßes zur Selektion der jeweils vorteilhafteren Codierungsart aufgrund der Ausgangssignale x1, x2, xi1, xi2 kann auf verschiedenartige Weise erfolgen, wie auch die nachfolgende Beschreibung unter Bezugnahme auf die Fig. 3 und 5 verdeutlichen wird. Es genügt jedoch, lediglich die Ähnlichkeit eines der Codierungsfehler-behafteten Ausgangssignale xi1 oder xi2 bezogen auf das zugehörige nicht-Codierungsfehler-behaftete Signal x1 bzw. x2 zu bewerten. Das Fehlermaß zwischen diesen ausgangsseitigen Spektralwerten, von dem das Ähnlichkeitsmaß abgeleitet werden kann, kann im einfachsten Fall durch Differenzbildung bestimmt werden, wenngleich auch diese Berechnungsart nicht die einzig mögliche ist.

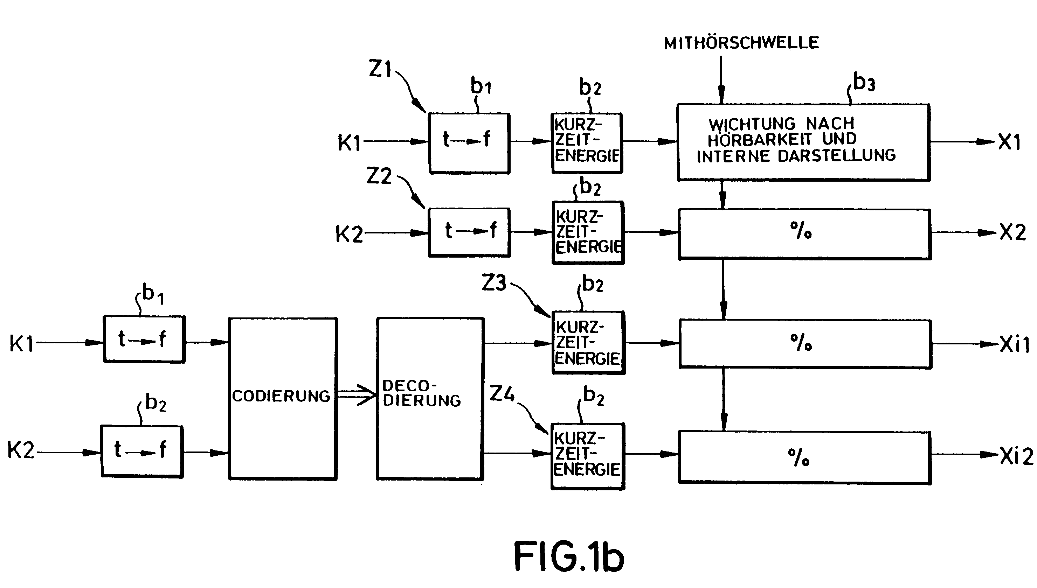

Fig. 1b zeigt ein zweites, gegenüber dem ersten Ausführungsbeispiel nur geringfügig abgewandeltes Ausführungsbeispiel einer Vorrichtung zur Durchführung wesentlicher Teile des Verfahrens zur Bestimmung der zu wählenden Codierungsart. Bei diesem Ausführungsbeispiel der Erfindung werden die Signale k1, k2 im dritten und vierten Zweig z3, z4 zunächst in den Blöcken b1 in den Frequenzbereich transformiert und erst nach ihrer Transformation in den Frequenzbereich derjenigen Codierungsart unterworfen, welche im Falle der Feststellung eines hohen Ähnlichkeitsmaßes verwendet wird, und sodann wieder decodiert, um zwei Codierungsfehler-behaftete Signale ki1, ki2 zu erzeugen. Sodann werden mittels einer durch eine psychoakustische Berechnung ermittelten Mithörschwelle die jeweiligen, tatsächlich hörbaren Spektralanteile ausgehend sowohl von den Spektralwerten xi1, xi2 der Codierungsfehler-behafteten Signale ki1, ki2 wie auch von den Spektralwerten der zu diesen Codierungsfehler-behafteten Signale zugehörigen Signale selektiert oder bewertet. Anschließend wird das Ähnlichkeitsmaß, aufgrund dessen eine der wenigstens zwei Codierungsarten ausgewählt wird, aufgrund der so selektierten oder bewerteten hörbaren Spektralanteile wenigstens des Codierungsfehler-behafteten Signales und des zugehörigen Signales berechnet.

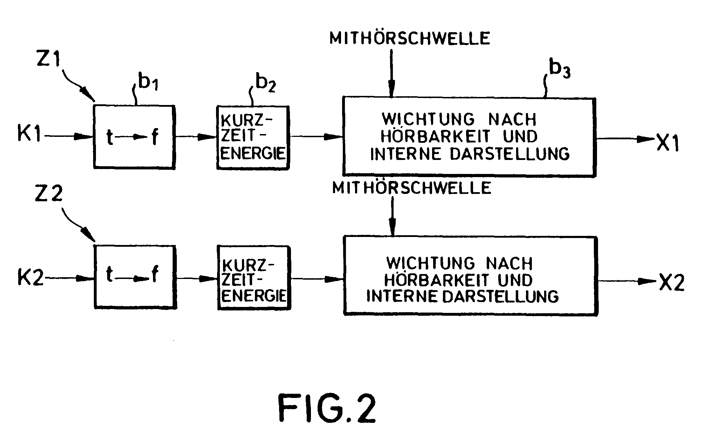

Eine Vorrichtung zur Bestimmung des Ähnlichkeitsmaßes für die Selektion des jeweils geeigneteren Codierungsverfahrens nach dem drittgenannten erfindungsgemäßen Verfahren ist in Fig. 2 dargestellt. Durch Vergleich mit Fig. 1a und Fig 1b erkennt man, daß die Vorrichtung gemäß Fig. 2 den ersten beiden Zweigen z1, z2 gemäß Fig. 1a und Fig. 1b identisch entspricht. Der dritte und vierte Zweig z3, z4 können hier entfallen. Aufgrund der Identität der ersten beiden Zweige z1, z2 bedarf es keiner erneuten Erläuterung der durch die Blöcke dieser Zweige durchgeführten Signalverarbeitung. Bei der Vorrichtung gemäß Fig. 2 werden also aufgrund der beiden Originalkanäle k1, k2 durch Zeit/Frequenz-Transformation und Bildung der Kurzzeitenergiewerte und deren Selektion oder Bewertung die tatsächlich hörbaren Spektralanteile x1, x2 der Originalkanäle k1, k2 gewonnen, wobei das Maß der Ähnlichkeit dieser tatsächlich hörbaren, selektierten oder bewerteten Spektralanteile x1, x2 mit einem Schwellenwert k verglichen wird. Überschreitet das Ähnlichkeitsmaß den Schwellenwert k, so wird diejenige Codierungsart ausgewählt, die sich aufgrund der höheren Datenreduktion besser zur Codierung von annähernd übereinstimmenden Stereosignalen eignet. Bei dem bevorzugten Ausführungsbeispiel kann dies das Intensity-Stereo-Codierungsverfahren sein. Liegt das Ähnlichkeitsmaß unter diesem Schwellenwert k, so werden die Kanäle bei dem bevorzugten Ausführungsbeispiel getrennt codiert.

Eine mögliche Vorrichtung zur Verarbeitung der Ausgangssignale der in Fig. 1a und Fig. 1b gezeigten Vorrichtungen zur Durchführung des erfindungsgemäßen Verfahrens zum Bestimmen der zu wählenden Codierungsart ist in Fig. 3 dargestellt. Hier werden jeweils die spektralen Codierungsfehler x1 minus xi1 bzw. x2 minus xi2 mit einem Schwellenwert k verglichen. Liegen beide Fehlerwerte x1 minus xi1 bzw. x2 minus xi2 unter dem Schwellenwert k, so wird das stärker datenreduzierende Verfahren verwendet, das bei dem bevorzugten Ausführungsbeispiel das Intensity-Stereo-Verfahren ist.

Fig. 5 zeigt ein abgewandeltes Ausführungsbeispiel der Vorrichtung zum Bestimmen des Ähnlichkeitsmaßes gemäß Fig. 3 aufgrund der Ausgangssignale der in Fig. 1a und Fig. 1b gezeigten Vorrichtungen zum Bestimmen der zu wählenden Codierungsart. Die beiden miteinander übereinstimmenden Schaltungsteile umfassen jeweils einen Knoten, an dem die Differenz xi1 minus x1 bzw. xi2 minus x2 zur Erzeugung eines Codierungsfehlersignales gebildet wird, sowie zwei Blöcke b4, b5 zur Aufsummation der Fehlersignale xi1 minus x1 bzw. xi2 minus x2 sowie der entsprechenden Nutzsignale x1 bzw. x2 über jeweils einen Signalblock. Nach dem blockweisen absoluten Aufsummieren dieser Fehler sowie Nutzsignalanteile wird in einem weiteren Block b6 ein Quotient der aufsummierten absoluten Fehlersignale bezogen auf die aufsummierten absoluten Nutzsignale gebildet und mit dem Schwellenwert k verglichen. Überschreitet das relative Fehlermaß in einem der beiden Kanäle die Schwelle k, so darf keine Intensity-Stereo-Codierung vorgenommen werden, sondern es muß eine getrennte Codierung verwendet werden.

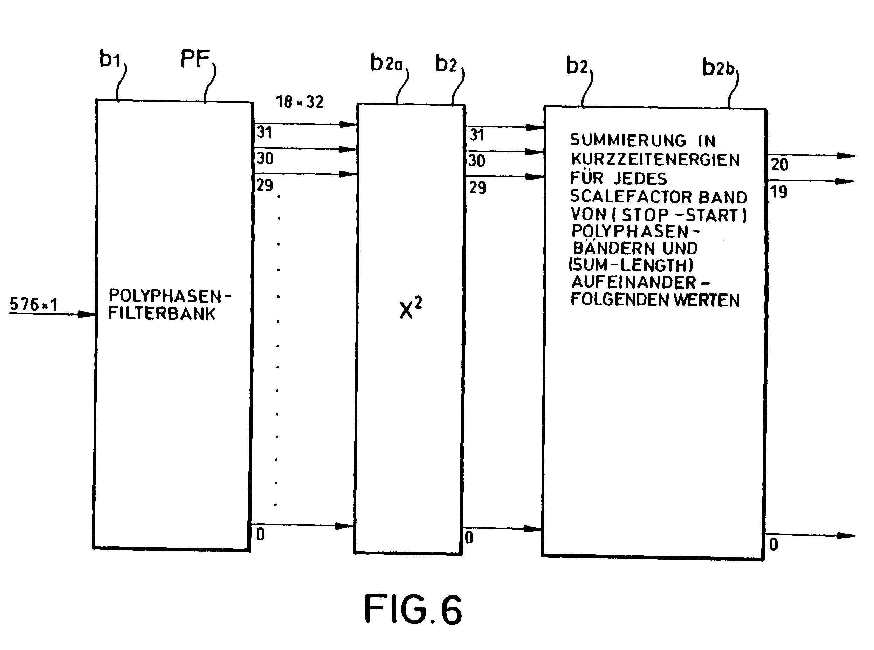

Nunmehr soll unter Bezugnahme auf Fig. 6 eine mögliche Ausführungsform der Blöcke b1 und b2 der Zweige z1, z2 bzw. z1 bis z4 gemäß den Fig. 1a, Fig. 1b und 2 erläutert werden. Es sei jedoch bereits an dieser Stelle hervorgehoben, daß sowohl die Zeit/Frequenz-Transformation diskreter Audiosignale wie auch die Bildung der Kurzzeitenergiewerte Maßnahmen sind, die dem Fachmann aus dem Bereich der Codierung, wenn auch nicht aus dem Bereich der Auswahl der Codierungsarten, bekannt sind.

Wie in Fig. 6 verdeutlicht wird, werden diskrete Eingangssignale einer Polyphasen-Filterbank PF zugeführt, die eine Zeit/Frequenz-Transformation des zeitdiskreten Eingangssignales in 32 (0 bis 31) "Polybänder" vornimmt. Bezüglich dieser Bänder wird auf Fig. 7, rechter Abschnitt "Polyphasen-Implementierung", linke und mittlere Spalte verwiesen. Wie der Fachmann gleichfalls aus Fig. 7 erkennt, ist die Bandbreite für jedes Scalefactor Band bei den frequenzmäßig unteren Scalefactor-Band-Nummern jeweils gleichbleibend und erst ab einer Grenzfrequenz ansteigend, um die Frequenzgruppenbreite und die zugehörige Zeitauflösung der Charakteristik des menschlichen Hörsinnes zu simulieren. Die Spektralwerte der 32 Polybänder (0 bis 31) werden in dem der Polyphasen-Filterbank b1 folgenden Block b2a zur Bildung der Energiewerte quadriert. In dem hierauf folgenden Block findet einerseits eine Summierung zur Bildung von Kurzzeitenergien für jedes Scalefactor-Band über jeweils unterschiedliche Summationslängen statt (Vergleiche Fig. 7, rechte Spalte), wobei mit den Summationslängen (sum. length) jeweils die Anzahl der aufeinanderfolgenden, aufzusummierenden Werte bezeichnet sind. Ferner werden die 32 Polybänder zu einer reduzierten Anzahl von Scalefactor-Bändern durch Zusammenfassung entsprechender Frequenzbänder zusammengefaßt. Im Falle von ISO Layer III sind insgesammt 21 Scalefactor-Bänder gewählt, wobei die Bildung der Kurzzeitenergien für jedes Scalefactor-Band durch Summation der aufeinanderfolgenden Werte ab SB-Nr. 10 implementiert ist.

In Fig. 6 wird darauf verzichtet, auch eine detailiertere Ausführungsform des Blockes b3 gemäß den Figuren 1 oder 2 wiederzugeben, da die Wichtung einzelner Spektralwerte nach Hörbarkeit unter Verwendung einer psychoakustisch berechneten Mithörschwelle allgemeines Fachwissen ist.

Zur Berechnung der Mithörschwelle wird auf folgende Fachveröffentlichung hingewiesen: ISO/IEC 11172 International Standard "Coding of moving pictures and associated audio for digital storage media up to 1,5 Mbit/s", Part 3: Audio, ANNEX D: Psychacoustic Models.

Soweit die Wichtung der Spektralanteile nach Hörbarkeit und nach interner Darstellung betroffen ist, kann auf folgende Standardliteraturstellen verwiesen werden:
- John G. Beerends, Jan A. Stemerdink: "A Perceptual Audio Quality Measure based on a psychoacoustic Sound representation", J. Audio Eng. Soc., Bd. 40, Nr. 12, Dezember 1992; sowie
- E. Zwicker, H. Fastl: "Psychoacoustics", Springer Verlag Berlin Heidelberg, 1990, Kap. 8.7.1 "Specific Loudness".

## Patentansprüche

1. Verfahren zum Bestimmen der zu wählenden Codierungsart für die Codierung von wenigstens zwei Signalen (k1, k2), bei dem eine Transformation von Signalen in den Frequenzbereich durchgeführt und ausgehend von Spektralwerten ein Ähnlichkeitsmaß ermittelt wird, aufgrund dessen eine von wenigstens zwei Codierungsarten ausgewählt wird, dadurch gekennzeichnet,
daß wenigstens eines der Signale (k1, k2), in derjenigen Codierungsart, welche im Falle der Feststellung eines hohen Ähnlichkeitsmaßes verwendet wird, zur Erzeugung wenigstens eines Codierungsfehler-behafteten Signales (ki1, ki2) codiert und sodann decodiert wird,
daß das Codierungsfehler-behaftete Signal (ki1, ki2) und das zugehörige, nicht mit dem Codierungsfehler behaftete Signal (k1, k2) in den Frequenzbereich transformiert werden,
daß eine Selektion oder Bewertung der jeweils tatsächlich hörbaren Spektralanteile ausgehend sowohl von den Spektralwerten des Codierungsfehler-behafteten Signales wie auch von den Spektralwerten des zugehörigen, nicht mit dem Codierungsfehler behafteten Signales unter Verwendung einer durch eine psychoakustische Berechnung ermittelten Mithörschwelle vorgenommen wird, und
daß das Ähnlichkeitsmaß aufgrund der derart selektierten oder bewerteten hörbaren Spektralanteile wenigstens des Codierungsfehler-behafteten Signales und des zugehörigen, nicht mit dem Codierungsfehler behafteten Signales berechnet wird.

2. Verfahren zum Bestimmen der zu wählenden Codierungsart für die Codierung von wenigstens zwei Signalen (k1, k2), bei dem eine Transformation von Signalen in den Frequenzbereich durchgeführt und ausgehend von Spektralwerten ein Ähnlichkeitsmaß ermittelt wird, aufgrund dessen eine von wenigstens zwei Codierungsarten ausgewählt wird, dadurch gekennzeichnet,
daß wenigstens eines der Signale (k1, k2) nach seiner Transformation in den Frequenzbereich in derjenigen Codierungsart, welche im Falle der Feststellung eines hohen Ähnlichkeitsmaßes verwendet wird, zur Erzeugung wenigstens eines Codierungsfehler-behafteten Signales (ki1, ki2) codiert und sodann decodiert wird,
daß eine Selektion oder Bewertung der jeweils tatsächlich hörbaren Spektralanteile ausgehend sowohl von den Spektralwerten des Codierungsfehler-behafteten Signales wie auch von den Spektralwerten des zugehörigen, nicht mit dem Codierungsfehler behafteten Signales unter Verwendung einer durch eine psychoakustische Berechnung ermittelten Mithörschwelle vorgenommen wird, und
daß das Ähnlichkeitsmaß aufgrund der derart selektierten oder bewerteten hörbaren Spektralanteile wenigstens des Codierungsfehler-behafteten Signales und des zugehörigen, nicht mit dem Codierungsfehler behafteten Signales berechnet wird.

3. Verfahren zum Bestimmen der zu wählenden Codierungsart für die Codierung von wenigstens zwei Signalen (k1, k2), bei dem eine Transformation von wenigstens zwei der Signale in den Frequenzbereich durchgeführt und ausgehend von Spektralwerten ein Ähnlichkeitsmaß für die Ähnlichkeit dieser Signale zueinander ermittelt wird, aufgrund dessen eine von wenigstens zwei Codierungsarten ausgewählt wird, dadurch gekennzeichnet,
daß ausgehend von den Spektralwerten der jeweiligen Signale (k1, k2) eine Selektion oder Bewertung der tatsächlich hörbaren Spektralanteile unter Verwendung einer durch eine psychoakustische Berechnung ermittelten Mithörschwelle vorgenommen wird, und
daß das Ähnlichkeitsmaß aufgrund der derart selektierten oder bewerteten hörbaren Spektralanteile der wenigstens zwei Signale (k1, k2) zur Auswahl der Codierungsart ermittelt wird.

4. Verfahren nach einem der Ansprüche 1 bis 3, dadurch gekennzeichnet,
daß zur Selektion oder Bewertung der tatsächlich hörbaren Spektralanteile eines jeden Signales (k1, k2) zunächst die Kurzzeitenergiewerte innerhalb von Frequenzbereichen, die in Abhängigkeit von Frequenzgruppenbreiten gewählt sind, bestimmt werden, und
daß aus diesen Kurzzeitenergiewerten die hörbaren Energiewerte durch deren Vergleich mit einer berechneten Mithörschwelle selektiert oder bewertet werden.

5. Verfahren nach Anspruch 4, dadurch gekennzeichnet,
daß die Kurzzeitenergiewerte für jeden Frequenzbereich über eine Zeitdauer ermittelt werden, die entsprechend der zeitlichen Auflösung des menschlichen Ohres für den betreffenden Frequenzbereich bei zunehmender Frequenzgruppenbreite abnimmt.

6. Verfahren nach Anspruch 4 oder 5, dadurch gekennzeichnet,
daß zur Selektion oder Bewertung der tatsächlich hörbaren Spektralwerte eine die Nichtlinearitäten des menschlichen Innenohres beschreibende Funktion auf die selektierten oder bewerteten Spektralanteile angewendet wird.

7. Verfahren nach Anspruch 6, dadurch gekennzeichnet,
daß die Funktion zur Beschreibung der Nichtlinearitäten des menschlichen Ohres die Form (x^{α}) hat, wobei für den Exponenten α gilt: 0,1 < α < 10.

8. Verfahren nach Anspruch 1 oder 2, dadurch gekennzeichnet,
daß die Transformation und Selektion oder Bewertung von tatsächlich hörbaren Spektralanteilen (xi1, xi2) je eines Codierungsfehler-behafteten Signales (ki1, ki2) sowie der Spektralanteile (x1, x2) je eines zugehörigen Signales (k1, k2) für jeden der Kanäle vorgenommen wird, und
daß das Ähnlichkeitsmaß aufgrund der jeweiligen Fehlermaße für jeden Kanal ermittelt wird, wobei die Fehlermaße jeweils aufgrund der hörbaren Spektralanteile (xi1, x1; xi2, x2) sowohl des Codierungsfehler-behafteten Signales (ki1, ki2) wie auch des zugehörigen Nicht-Codierungsfehler-behafteten Signales (x1, x2) für den jeweiligen Kanal ermittelt werden.

9. Verfahren nach einem der Ansprüche 1 bis 8, dadurch gekennzeichnet,
daß das Ähnlichkeitsmaß mit einem Schwellenwert (k) verglichen wird, und
daß für den Fall, daß das Ähnlichkeitsmaß den Schwellenwert unterschreitet, eine getrennte Codierung der Kanäle vorgenommen wird, während anderenfalls eine Intensity-Stereo-Codierung der Kanäle vorgenommen wird.

## Claims

1. Method for determining the type of coding to be selected for coding at least two signals (k1, k2), in which a transformation of signals into the frequency domain is carried out and, starting from spectral values, a similarity measure is determined on the basis of which one of at least two types of coding is selected, characterized in that
for the purpose of generating at least one signal (ki1, ki2) affected by coding error, at least one of the signals (k1, k2) is coded and then decoded in that type of coding which is used in the case of determining a high similarity measure,
in that the signal (ki1, ki2) affected by coding error, and the associated signal (k1, k2) not affected by the coding error are transformed into the frequency domain,
in that, starting both from the spectral values of the signal affected by coding error and from the spectral values of the associated signal not affected by the coding error, a selection or evaluation of the respectively actually audible spectral components is undertaken using a listening threshold determined by a psychoacoustic calculation, and
in that the similarity measure is calculated on the basis of the audible spectral components, selected or evaluated in such a way, at least of the signal affected by coding error and the associated signal not affected by the coding error.

2. Method for determining the type of coding to be selected for coding at least two signals (k1, k2), in which a transformation of signals into the frequency domain is carried out and, starting from spectral values, a similarity measure is determined on the basis of which one of at least two types of coding is selected, characterized in that,
after its transformation into the frequency domain, for the purpose of generating at least one signal (ki1, ki2) affected by coding error, at least one of the signals (k1, k2) is coded and then decoded in that type of coding which is used in the case of determining a high similarity measure,
in that, starting both from the spectral values of the signal affected by coding error and from the spectral values of the associated signal not affected by the coding error, a selection or evaluation of the respectively actually audible spectral components is undertaken using a listening threshold determined by a psychoacoustic calculation, and
in that the similarity measure is calculated on the basis of the audible spectral components, selected and evaluated in such a way, of at least the signal affected by coding error and the associated signal not affected by the coding error.

3. Method for determining the type of coding to be selected for coding at least two signals (k1, k2), in which a transformation of at least two of the signals into the frequency domain is carried out and, starting from spectral values, a similarity measure for the mutual similarity of these signals is determined on the basis of which one of at least two types of coding is selected, characterized in
that starting from the spectral values of the respective signals (k1, k2) a selection or evaluation of the actually audible spectral components is undertaken using a listening threshold determined by a psychoacoustic calculation, and
in that the similarity measure is determined on the basis of the audible spectral components, selected or evaluated in such a way, of the at least two signals (k1, k2) for the purpose of selecting the type of coding.

4. Method according to one of claims 1 to 3, characterized in
that for the purpose of selecting or evaluating the actually audible spectral components of each signal (k1, k2), the short-time energy values within frequency domains which are selected as a function of frequency group widths are first determined, and
in that the audible energy values are selected or evaluated from these short-time energy values by comparing them with a calculated listening threshold.

5. Method according to claim 4, characterized in
that the short-time energy values are determined for each frequency domain over a period which decreases in accordance with the temporal resolution of the human ear for the frequency domain concerned in the case of increasing frequency group width.

6. Method according to claim 4 to 5, characterized in
that for the purpose of selecting or evaluating the actually audible spectral values, a functiondescribing the nonlinearities of the human innerear is applied to the selected or evaluatedspectral components.

7. Method according to claim 6, characterized in
that the function for describing the nonlinearities of the human ear has the form (xα), it holding for the exponent α that: 0.1 < α < 10.

8. Method according to claim 1 or 2, characterized in
that the transformation and selection or evaluation of actually audible spectral components (xi1, xi2) of one signal (ki1, ki2) each, affected by coding error, as well as of the spectral components (x1, x2) of one associated signal (k1, k2) each is undertaken for each of the channels, and
in that the similarity measure is determined on the basis of the respective measures of error for each channel, the measures of error respectively being determined for the respective channel on the basis of the audible spectral components (xi1, x1; xi2, x2) and of the signal (ki1, ki2) affected by coding error, as well as of the associated signal (x1, x2) not affected by coding error.

9. Method according to one of claims 1 to 8, characterized in
that the similarity measure is compared with a threshold value (k), and in that a separate coding of the channels is undertaken for the case in which the similarity measure undershoots the threshold value, whereas in other cases an intensity- stereo coding of the channels is undertaken.

## Revendications

1. Procédé de détermination du mode de codage à sélectionner pour coder au moins deux signaux (k1, k2), dans lequel il est réalisé une transformation de signaux à la plage de fréquences et, partant des valeurs spectrales, il est déterminé un degré de similitude sur base duquel il est sélectionné l'un parmi au moins deux modes de codage, caractérisé par le fait
qu'au moins l'un des signaux (k1, k2) est codé selon le mode de codage qui est utilisé en cas de constatation d'un haut degré de similitude, pour générer au moins un signal présentant une erreur de codage (ki1, ki2), et est ensuite décodé,
que le signal présentant une erreur de codage (ki1, ki2) et le signal correspondant ne présentant pas l'erreur de codage (k1, k2) sont transformés à la plage de fréquences,
qu'il est procédé à une sélection ou évaluation des parties spectrales effectivement audibles en partant tant des valeurs spectrales du signal présentant une erreur de codage que des valeurs spectrales du signal correspondant ne présentant pas l'erreur de codage, en utilisant un seuil d'écoute déterminé par un calcul psycho-acoustique, et
qu'il est calculé le degré de similitude sur base des parties spectrales audibles ainsi sélectionnées ou évaluées au moins du signal présentant une erreur de codage et du signal correspondant ne présentant pas l'erreur de codage.

2. Procédé de détermination du mode de codage à sélectionner pour coder au moins deux signaux (k1, k2), dans lequel il est réalisé une transformation de signaux à la plage de fréquences et, partant des valeurs spectrales, il est déterminé un degré de similitude sur base duquel il est sélectionné l'un parmi au moins deux modes de codage, caractérisé par le fait
qu'au moins l'un des signaux (k1, k2) est codé, après sa transformation à la fréquence, selon le mode de codage qui est utilisé en cas de constatation d'un haut degré de similitude, pour générer au moins un signal présentant une erreur de codage (ki1, ki2), et est ensuite décodé,
qu'il est procédé à une sélection ou évaluation des parties spectrales effectivement audibles en partant tant des valeurs spectrales du signal présentant une erreur de codage que des valeurs spectrales du signal correspondant ne présentant pas l'erreur de codage, en utilisant un seuil d'écoute déterminé par un calcul psycho-acoustique, et
qu'il est calculé le degré de similitude sur base des parties spectrales audibles ainsi sélectionnées ou évaluées au moins du signal présentant une erreur de codage et du signal correspondant ne présentant pas l'erreur de codage.

3. Procédé de détermination du mode de codage à sélectionner pour coder au moins deux signaux (k1, k2), dans lequel il est réalisé une transformation d'au moins deux des signaux à la plage de fréquences et, partant des valeurs spectrales, il est déterminé, pour la similitude entre eux de ces signaux, un degré de similitude sur base duquel il est sélectionné l'un parmi au moins deux modes de codage, caractérisé par le fait
que, partant des valeurs spectrales des signaux respectifs (k1, k2), il est procédé à une sélection ou évaluation des parties spectrales effectivement audibles, en utilisant un seuil d'écoute déterminé par un calcul psycho-acoustique, et
qu'il est déterminé le degré de similitude des parties spectrales audibles ainsi sélectionnées ou évaluées des au moins deux signaux (k1, k2), pour sélectionner le mode de codage.

4. Procédé suivant l'une des revendications 1 à 3, caractérisé par le fait
que, pour sélectionner ou évaluer les parties spectrales effectivement audibles de chacun des signaux (k1, k2), il est tout d'abord déterminé les valeurs d'énergie de courte durée dans des plages de fréquences qui sont sélectionnées en fonction de largeurs de groupes de fréquences, et
qu'à partir de ces valeurs d'énergie de courte durée, les valeurs d'énergie audibles sont sélectionnées ou évaluées en les comparant à un seuil d'écoute calculé.

5. Procédé suivant la revendication 4, caractérisé par le fait que les valeurs d'énergie de courte durée sont déterminées, pour chaque plage de fréquences, sur une période qui, selon la résolution dans le temps de l'oreille humaine pour la plage de fréquences concernée, diminue lorsque la largeur de groupes de fréquences augmente.

6. Procédé suivant la revendication 4 ou 5, caractérisé par le fait que pour sélectionner ou évaluer les parties spectrales effectivement audibles, il est appliqué aux parties spectrales sélectionnées ou évaluées une fonction décrivant les non-linéarités de l'oreille interne humaine.

7. Procédé suivant la revendication 6, caractérisé par le fait que la fonction de description des non-linéarités de l'oreille humaine a la forme (x^{α}), pour l'exposant α valant: 0,1 < α < 10.

8. Procédé suivant la revendication 1 ou 2, caractérisé par le fait
qu'il est procédé à la transformation et à la sélection ou évaluation de parties spectrales effectivement audibles (xi1, xi2) de chaque fois un signal présentant une erreur de codage (ki1, ki2) ainsi que des parties spectrales (x1, x2) de chaque fois un signal correspondant (k1, k2) pour chacun des canaux, et
que le degré de similitude est déterminé sur base du degré d'erreur concerné de chaque canal, le degré d'erreur étant chaque fois déterminé sur base des parties spectrales audibles (xi1, x1; xi2, x2) tant du signal présentant une erreur de codage (ki1, ki2) que du signal correspondant ne présentant pas d'erreur de codage (x1, x2) pour le canal concerné.

9. Procédé suivant l'une des revendications 1 à 8, caractérisé par le fait que le degré de similitude est comparé à une valeur de seuil (k), et
qu'au cas où le degré de similitude est inférieur à la valeur de seuil, il est procédé à un codage séparé des canaux, tandis que, dans le cas contraire, il est procédé à un codage d'intensité stéréo des canaux.
